# EUROPEAN PATENT APPLICATION

(11) **EP 4 851 318 A1**
(43) Date of publication of application: **09.12.2026**
(21) Application number: 24922193.8
(22) Date of filing: 23.07.2024
(51) Int. Cl.: C22C 1/08, B22F 3/11, C22C 14/00

(54) **TITANIUM POROUS BODY AND METHOD FOR PRODUCING HYDROGEN**

(30) Priority: 29.01.2024 JP 2024011270
(71) Applicant: Toho Titanium CO., LTD., Chigasaki-shi Kanagawa 253-8510 (JP)
(72) Inventor: INOUE,Yosuke, Chigasaki-shi, Kanagawa 253-8510 (JP)
(74) Representative: Mewburn Ellis LLP
(86) International application number: PCT/JP2024/026365
(87) International publication number: WO 2025/163934

(57) **Abstract**

The titanium porous body according to the present invention is sheet-shaped, and has a maximum height Rz of 5 µm or less on at least one surface, has an irreversible deformation of 0.2% or less when subjected to a pressure of 100 MPa, and has a thickness of 500 µm or less.

## Description

### [Technical Field]

The present invention relates to a sheet-shaped titanium porous body and a method for producing hydrogen.

### [Background Art]

A titanium porous body produced by sintering titanium powder or the like has air permeability or liquid permeability due to its pores, and electrical conductivity, as well as high corrosion resistance due to formation of a passive film on its surface, or the like.

A titanium porous body having such properties has been studied for use as a porous transport layer (PTL) or the like in an environment where corrosion may occur in a polymer electrolyte membrane (PEM) type water electrolysis device. In particular, hydrogen produced by water electrolysis devices such as the PEM type using electricity derived from renewable energy sources is referred to as "green hydrogen," and has attracted great expectations in recent years as momentum toward achieving a decarbonized society accelerates.

In this regard, Patent Literature 1, with the object of "ensuring that one sheet surface is smooth to a certain extent, while the other sheet surface side exhibits the required air permeability or liquid permeability, and keeping compressive deformation relatively small when a predetermined pressure is applied", proposes "a sheet-shaped titanium-based porous body containing titanium, having a thickness of 0.8 mm or less and a porosity of 30% to 65%, wherein the maximum height Rz1 of one sheet surface is 30 µm or less, a ratio (Rz2/Rz1) of the maximum height Rz2 of the other sheet surface to the maximum height Rz1 of the one sheet surface is 1.2 or more, and a compression deformation rate is 19% or less".

Furthermore, Patent Literature 2, under the object of "providing a method for producing a titanium porous body that can effectively suppress delamination defects and cracking even in the case of low-density, thin-type sintered bodies using spherical gas-atomized powders", discloses "a method for producing a titanium porous body characterized by using a molybdenum or molybdenum alloy material having an arithmetic mean roughness Ra of 0.1 µm or less and a maximum height Rz of 1.0 µm or less on its surface, as a setter for placing titanium or titanium alloy powder when producing a porous powder sintered body made of titanium or a titanium alloy".

### [Citation List]

### [Patent Literature]

[PTL 1] Japanese Patent No. 7061735 B
[PTL 2] Japanese Patent No. 4098169 B

### [Summary of Invention]

### [Technical Problem]

In the above water electrolysis device, from the viewpoint of downsizing the device, a thin sheet-shaped titanium porous body having excellent compression resistance may be required. There is a concern that a titanium porous body having poor compression resistance may not be able to maintain the required thickness or shape against the compressive force that may act when it is incorporated into a device such as a PEM-type water electrolysis device, resulting in decreased air permeability or liquid permeability.

Furthermore, when a titanium porous body is used as a porous transport layer in a PEM-type water electrolysis device, the titanium porous body may be incorporated while being pressed against the electrolyte membrane. In this case, depending on the surface properties of the titanium porous body pressed against the electrolyte membrane, the electrolyte membrane may become partially and significantly deformed, potentially causing damage to the electrolyte membrane.

Patent Literature 1 describes a titanium porous body having a relatively small maximum height Rz on its surface and a relatively small compression deformation rate; however, this titanium porous body had room for further improvement in terms of surface smoothness and compression resistance. Patent Literature 2 does not discuss the surface roughness or compression resistance of the titanium porous body.

The object of the present invention is to provide a titanium porous body having at least one relatively smooth surface and excellent compression resistance, as well as a method for producing hydrogen.

### [Solution to Problem]

The inventors have found that a titanium porous body can be evaluated as having a smooth surface and excellent compression resistance if the maximum height Rz of at least one surface and the amount of irreversible deformation under a pressure of 100 MPa are each equal to or less than predetermined values. Furthermore, through intensive studies, the inventors have found that to produce such a titanium porous body, it is effective to appropriately adjust the conditions during drying and sintering when sequentially performing paste drying, debinding, and sintering.

The titanium porous body according to the present invention is in a sheet shape, and has a maximum height Rz of 5 µm or less on at least one surface, an irreversible deformation of 0.2% or less when subjected to a pressure of 100 MPa, and a thickness of 500 µm or less.

The above titanium porous body preferably has a porosity of 30% or more and 50% or less.

The above titanium porous body may be a powder sintered body. The Ti content of the titanium porous body is preferably 97 % by mass or more. The O content of the titanium porous body is preferably 0.6 % by mass or more and 2.0 % by mass or less. The above thickness is preferably 30 µm to 400 µm. It is preferable that the above amount of irreversible deformation be 0.1% or less.

The method for producing hydrogen according to the present invention includes decomposing water and generating hydrogen using a PEM-type water electrolysis device including any one of the above titanium porous bodies.

### [Advantageous Effects of Invention]

The titanium porous body according to the present invention has at least one surface that is relatively smooth and exhibits excellent compression resistance.

### [Description of Embodiments]

Embodiments of the present invention will be described in detail below.

The titanium porous body according to one embodiment of the present invention is in a sheet shape, and has a maximum height Rz of 5 µm or less on at least one surface, an irreversible deformation of 0.2% or less when subjected to a pressure of 100 MPa, and a thickness of 500 µm or less.

### (Composition)

The titanium porous body is made of titanium. When it is made of titanium, a titanium porous body having high electrical conductivity at an appropriate relative density can be obtained. The Ti content of the titanium porous body is preferably 97 % by mass or more, and more preferably 98 % by mass or more. The upper limit of the Ti content is not particularly limited, but it may be, for example, 99.8 % by mass or less, or 99 % by mass or less. The Ti content refers to the purity of titanium, taking into account, as impurity, not only metallic components but also gas components such as oxygen. Therefore, the Ti content is determined by subtracting the total impurity content including metallic components and gas components from 100 % by mass.

The titanium porous body may contain Fe as an impurity, and the Fe content may be 0.25% by mass or less, for example. The titanium porous body may also contain Ni, Cr, Al, Cu, Zn, and Sn as unavoidable impurities resulting from raw materials or the production process, for example. It is preferable that the content of each of Ni, Cr, Al, Cu, Zn, and Sn be less than 0.10 % by mass, and that their total content be less than 0.30 % by mass. To measure the content of unavoidable impurities in the titanium porous body, the titanium porous body can be melted in an inert gas atmosphere (such as argon gas) to produce a cast piece, which can then be subjected to XRF analysis.

The O (oxygen) content of the titanium porous body is not particularly limited, but may be 0.6 % by mass or more and 2.0 % by mass or less, and further 0.9 % by mass or more and 1.6 % by mass or less. The O content can be measured by inert gas fusion-infrared absorption spectroscopy.

The titanium porous body may have a purity corresponding to pure titanium grades 1 to 4, typically grades 1 to 2, as defined in JIS H 4600 (2012), except for the oxygen content.

### (Sheet Dimensions)

The thickness of the sheet-shaped titanium porous body is 500 µm or less. For example, a relatively thin titanium porous body of this kind may be required for the porous transport layer of a PEM-type water electrolysis device. This is because if the thickness is too large, it may lead to an increase in the size of the PEM-type water electrolysis device. The thickness of the titanium porous body may be, for example, 30 µm to 400 µm, and typically 80 µm to 300 µm. Even with such a thin titanium porous body, since at least one surface is smooth and possesses excellent compression resistance in this embodiment, it is possible to achieve both downsizing of the water electrolysis device and long-term use within the water electrolysis device.

The thickness is measured at a total of five points, four points at the periphery and one point at the center of the titanium porous body, using a digital thickness gauge with a flat probe of Φ10 mm and a measurement accuracy of 0.001 to 0.01 mm, such as the Digital Thickness Gauge (Model No. 547-321) manufactured by Mitutoyo Corporation, and the average of these measured values is taken as the thickness. If the sheet-shaped titanium porous body is rectangular in plan view, the above four peripheral points are the four corner points.

The surface area of the sheet-shaped titanium porous body in plan view is not particularly limited and may be determined as appropriate depending on the application; however, for example, it may be set to an upper limit of 0.75 m² or less, 0.42 m² or less, or 0.13 m² or less, and a lower limit of 70 mm² or more, 250 mm² or more, 10,000 mm² or more, or 25,000 mm² or more.

The term "sheet-shaped" as applied to the titanium porous body refers to a platelike or foil-like shape in which the thickness is small relative to the dimensions in plan view. The plan view shape of the titanium porous body is not particularly limited, but it may be a square shape, a rectangular shape having an aspect ratio of 1:1 to 1:3, a rhombus-shaped or other polygonal shapes, an elliptical shape, or a circular shape such as a perfect circle shape. A polygonal titanium porous body may have its corners chamfered.

### (Surface Roughness)

The maximum height Rz of at least one surface of the titanium porous body is 5 µm or less. It is acceptable for the titanium porous body to have a maximum height Rz of 5 µm or less on both the front and back surfaces. In titanium porous bodies produced by the method described below, the maximum height Rz of the surface that was in contact with the substrate during drying tends to be smaller.

The maximum height Rz refers to the sum of the maximum profile peak height and the maximum profile valley depth within the profile over a sampling length. The arithmetic mean roughness Ra represents the average of the surface undulations, whereas the maximum height Rz allows for the confirmation of the presence of large depressions or protrusions, and thus can serve as an indicator for assessing the likelihood of damage to the electrolyte membrane.

It is preferable that the maximum height Rz of at least one surface of the titanium porous body be 4 µm or less. It should be noted that the maximum height Rz of at least one surface is not limited to this value but it may, for example, be 1 µm or more. The maximum height Rz is measured in accordance with ISO 4287: 1997.

### (Irreversible Deformation)

The titanium porous body has an irreversible deformation of 0.2% or less, which is the ratio of the change in thickness before and after performing twice the operation of applying a pressure of 100 MPa in the thickness direction for 3 minutes and then unloading.

As a result, when the titanium porous body is incorporated into a device such as a PEM-type water electrolysis device, it can maintain a certain thickness or shape and exhibit the required air permeability or liquid permeability when a compressive force is applied. The above irreversible deformation is preferably 0.1% or less. Since a smaller irreversible deformation is preferable, the lower limit is not particularly limited and may be set as appropriate according to the intended purpose.

The irreversible deformation Dc is a value calculated by measuring a thickness T1 of the titanium porous body before applying a pressure of 100 MPa and a thickness T2 of the titanium porous body after performing twice the operation of applying the pressure and then unloading, according to the equation: Dc = (1 - T2/T1) × 100.

More specifically, to measure the irreversible deformation Dc, a thickness T1 of a sample in which the plan view of the titanium porous body is square (projected area of 20 mm × 20 mm) is measured in advance. The sample is then sandwiched between the flat surfaces of two flat plates or the like in the thickness direction, and the flat surfaces are displaced in a direction that brings them closer to each other, thereby applying a pressure of 100 MPa uniformly over the surface of the sample in the thickness direction for 3 minutes. The displacement rate can be kept constant at 0.1 mm/min. After applying the pressure, the pressure is unloaded. This operation of applying and unloading the pressure is performed again, so that the operation is performed twice in total. The thickness T2 of the sample removed from the space between the flat surfaces is then measured. Here, various compression test devices or other devices capable of applying a pressure to the sample in this manner can be used. To measure the thicknesses T1 and T2 of the sample, the thickness is measured at one point at the center of gravity of the sample in plan view. This measurement is performed for five different samples, and the average value is adopted as the irreversible deformation.

### (Porosity)

A titanium porous body may be a sintered body having a skeleton formed by the sintering and bonding of titanium powder particles. In this case, it has a three-dimensional network structure in which pores are formed between the mutually bonded titanium powder particles.

For example, when a titanium porous body is produced by sintering titanium powder as described below, the titanium porous body becomes a powder sintered body, and the skeleton of the three-dimensional network structure defining the voids in the titanium porous body tends to take on a sponge-titanium-like form. This sponge-titanium-like three-dimensional network structure has a shape similar to or analogous to that of sponge titanium produced by the Kroll process. On the other hand, when titanium fibers are used, the titanium porous body becomes a fiber sintered body, and the skeleton of the three-dimensional network structure defining the voids within the titanium porous body often takes on a non-woven fabric-like form. Furthermore, in a method using a paste containing titanium powder, an organic binder, or the like, wherein the paste is dried and the titanium powder is then sintered, if a foaming agent is included in the paste, the titanium porous body produced thereby tends to form voids within the skeleton due to the influence of the foaming agent. In this case, the voids in the titanium porous body tend to become larger, and consequently, the irreversible deformation and the maximum height Rz of the surface tend to increase, which is not preferable.

The porosity of the titanium porous body is preferably 30% or more and 50% or less, and more preferably 35% or more and 47% or less. If the porosity is within this range, it is possible to ensure the required air permeability or liquid permeability for the intended application while suppressing breakage during handling. When the porosity is 30% or more, good air permeability or liquid permeability is obtained. On the other hand, when the porosity is 50% or less, cracks are less likely to occur during handling.

The porosity ε of the titanium porous body is calculated using the apparent density ρ' calculated from the volume, which can be calculated from the width, length, and thickness of the titanium porous body, and the mass, and the true density ρ (4.51 g/cm³) of titanium forming the titanium porous body, according to the equation: ε = (1 - ρ'/ρ) × 100.

### (Applications)

The above titanium porous body is particularly suitable for use as the porous transport layer of a PEM-type water electrolysis device. The PEM-type water electrolysis device may include an anode and a cathode, an electrolyte membrane such as a perfluorocarbon sulfonate membrane disposed between the anode and cathode and having electrode catalyst layers such as platinum group metals provided on both surfaces, and a porous transport layer disposed between each electrode catalyst layer of the electrolyte membrane and the anode or cathode.

In the above PEM-type water electrolysis device, when water is fed to the anode and a voltage is applied, the water that moves through the porous transport layer on the anode side and reaches the electrode catalyst layer is decomposed, producing oxygen and protons (H⁺). The protons move from the anode to the cathode through the electrolyte membrane, gain electrons in the electrode catalyst layer on the cathode side, and generate hydrogen on the cathode side. Oxygen, on the other hand, moves through the porous transport layer to the discharge-side flow channel and is discharged to the outside of the device.

In such a PEM-type water electrolysis device, the space where the porous transport layer is placed, especially on the anode side, is subject to strongly acidic and strongly oxidizing conditions; however, a titanium porous body having high corrosion resistance can be suitably used as a porous transport layer even in such an extremely harsh environment. Furthermore, as described above, in the titanium porous body according to the present invention, since the maximum height Rz of at least one surface is small, when that surface side is pressed against the electrolyte membrane in a PEM-type water electrolysis device, the occurrence of damage to the electrolyte membrane can be suppressed.

In addition to the above PEM-type water electrolysis device, the use of the titanium porous body is also being considered for organic electrolytic synthesis using a PEM-type reactor. In such a device, electrolysis is also performed by passing protons through a proton exchange membrane. The titanium porous body described herein is believed to have the potential to be suitably used for organic electrolytic synthesis using a PEM-type reactor, and is considered to be usable as a porous transport layer (PTL) on the anode side of an electrolysis device that uses a proton exchange membrane.

### (Production Method)

To produce the titanium porous body described above, one may, for example, dry a paste containing titanium powder and then perform debinding and sintering in that order on the resulting formed body.

The paste is prepared by mixing titanium powder, an organic binder, an organic solvent, and a dispersant, and does not contain water as a solvent or a foaming agent. However, water that is unavoidably introduced during the paste preparation process due to moisture absorption or similar factors is permissible. The addition of a dispersant facilitates the dispersion of titanium powder within the paste, ultimately yielding a titanium porous body having the desired maximum height Rz and porosity. By excluding water as a solvent and a foaming agent, it is possible to suppress the agglomeration of titanium powder caused by differences in the drying behavior between organic solvents and water during drying, as well as the formation of localized voids due to foaming.

The titanium powder may be any suitable powder, such as ground powder, spherical powder (e.g., atomized powder), titanium hydride powder obtained by hydrogenating titanium raw materials such as sponge titanium and and grinding the hydrogenated materials, or hydrogenation-dehydrogenation powder (HDH powder) obtained by subjecting titanium hydride powder to a dehydrogenation treatment. The mass ratio (Ms/Mb) of the mass of the organic solvent Ms to the mass of the organic binder Mb in the paste may be in the range of 2.5 to 4.5, or in the range of 2.5 to 3.5.

The paste is applied in a relatively thin layer onto a substrate such as a resin substrate having a release agent on its surface, and then subjected to drying. During drying, it is important to heat the paste at a relatively low temperature for an extended period. As a result, the titanium powder in the paste forms a formed body in which the particles are in multiple point contact with one another in an appropriate arrangement. If the heating temperature during drying is too high, the organic solvent will evaporate too quickly, disrupting the arrangement of the titanium powder, which can result in a rough surface on the finally obtained titanium porous body. Heating the paste for an extended period allows the organic solvent to evaporate sufficiently, and an appropriate duration can be set while also considering lead time. As an example, the heating temperature during drying may be set to 100°C for a duration of 3 hours.

For the formed body obtained by drying the paste, debinding is performed by heating at 360°C for approximately 6 hours to volatilize the organic binder, followed by sintering of the titanium powder contained therein. Typically, debinding is performed after the formed body has been peeled off the substrate. For sintering, it is desirable to heat the formed body at a relatively low temperature (approximately 775°C) for a relatively long period (approximately 5 hours) at which sintering of the titanium powder occurs. Heating at a low temperature allows the sintering to proceed gradually while the titanium powder within the formed body maintains an appropriate arrangement and remains in contact with one another. As a result, even a relatively thin sheet-shaped titanium porous body after sintering has a smooth surface and exhibits excellent compression resistance.

### [Examples]

Next, the titanium porous body according to the present invention was experimentally produced, and its effects were confirmed as described below. However, descriptions herein are merely for illustration, and are not intended to be limited thereto.

A paste was prepared by mixing HDH titanium powder having an average particle diameter of 13 µm with polyvinyl butyral as the organic binder, isopropyl alcohol as the organic solvent, and SN Sperse 2190 as a dispersant manufactured by Sannopco Co., Ltd. The dispersant was added in an amount corresponding to a concentration of 0.1 % by mass in the paste. The mass ratio Ms/Mb of the organic solvent (Ms) to the organic binder (Mb) was set within the range of 2.5 to 3.5. No water or foaming agent was added to the paste.

The above paste was applied in sheet form onto a PET sheet serving as a resin substrate having a release agent on its surface, and then dried by heating in an air atmosphere at the temperatures and for the durations shown in Table 1 to remove the organic solvent, thereby obtaining a formed body. The formed body was then peeled off the PET sheet and then subjected to debinding by heating at 360°C for 6 hours in an air atmosphere. Subsequently, in a vacuum atmosphere (1.0 × 10⁻³ Pa or less), the formed body was heated at the temperatures and for the durations shown in Table 1 to sinter the titanium powder therein, yielding a sheet-shaped titanium porous body as a sintered body. The surface dimensions of the sheet-shaped titanium porous body in plan view were set to 700 mm × 600 mm.

In Comparative Example 3, because the drying temperature was relatively low and the drying time was short, the drying was insufficient and a formed body could not be obtained. Consequently, subsequent debinding and sintering could not be performed, and the titanium porous body could not be produced.

In the Examples and Comparative Examples 1, 2, 4, and 6, the formed body was placed on a graphite setter and heated during sintering. Among these, in Comparative Example 4, the sintering temperature was too high, causing the titanium porous body to adhere to the setter; when attempting to peel it off the setter, cracking occurred, so that the titanium porous body could not be produced. In light of this, in Comparative Example 5, a BN (boron nitride) coating was applied to the setter as a release layer, and the formed body was placed on top of it and heated. As a result, it became possible to peel the body off the setter, and the titanium porous body was successfully produced.

For the titanium porous bodies obtained in each of Examples and Comparative Examples 1, 2, 5, and 6, the thickness, the maximum height Rz of one surface (the surface that was in contact with the resin substrate during production), the irreversible deformation, and the porosity were each measured according to the methods described above. The results are shown in Table 1. The oxygen content of these titanium porous bodies was in the range of 0.9 % by mass or more and 1.6 % by mass or less.

**[Table 1]**

| | Drying | | Sintering | | Titanium Porous Body | | | |
|---|---|---|---|---|---|---|---|---|
| | Temperature CC) | Time (min) | Temperature (°C) | Time (hr) | Thickness (µm) | Maximum Height Rz (µm) | Irreversible Deformation (%) | Porosity (%) |
| Ex. | 100 | 180 | 775 | 5 | 250 | 4 | 0.1 | 40 |
| Comp. 1 | 120 | 20 | 775 | 1 | 250 | 9 | 0.2 | 40 |
| Comp. 2 | 120 | 20 | 775 | 5 | 250 | 8 | 0.2 | 40 |
| Comp. 3 | 100 | 20 | Insufficient drying, preventing progression to debinding step. | | | | | |
| Comp. 4 | 100 | 180 | 1050 | 1 | Cracks formed due to adhering to setter | | | |
| Comp. 5 | 100 | 180 | 1050 (BN Coated) | 1 | 250 | 20 | 0.1 | 37 |
| Comp. 6 | 100 | 180 | 730 | 5 | 250 | 5 | 3% or more | 44 |

In the Examples, it is believed that a titanium porous body having a small maximum height Rz and a small irreversible deformation was obtained because the temperatures during drying and sintering were kept relatively low and the durations were extended to some extent. In Comparative Examples 1 and 2, the drying temperature was higher, and it was considered that this caused the maximum height Rz of the surface of the titanium porous body to increase. In Comparative Example 1, the sintering time was shortened compared to Comparative Example 2 in an attempt to improve the surface properties, but the desired maximum height Rz was not achieved. Based on these results, it was considered that if the arrangement of titanium powder within the formed body is disrupted during drying, it becomes difficult to improve the surface properties of the finally obtained titanium porous body, even if the conditions are changed during subsequent sintering. In Comparative Example 5, it was considered that the sintering temperature was too high, causing excessive sintering, which resulted in a larger maximum height Rz on the surface of the titanium porous body. In Comparative Example 6, due to the lower sintering temperature, the irreversible deformation was larger, resulting in a titanium porous body with poor compression resistance.

From the foregoing, it was found that the present invention provides a titanium porous body having at least one relatively smooth surface and excellent compression resistance.

## Claims

1. A sheet-shaped titanium porous body,
wherein a maximum height Rz of at least one surface is 5 µm or less, an irreversible deformation under a pressure of 100 MPa is 0.2% or less, and a thickness is 500 µm or less.

2. The titanium porous body according to claim 1, wherein the titanium porous body has a porosity of 30% or more and 50% or less.

3. The titanium porous body according to claim 1 or 2, which is a powder sintered body.

4. The titanium porous body according to any one of claims 1 to 3, wherein the titanium porous body has a Ti content of 97 % by mass or more.

5. The titanium porous body according to any one of claims 1 to 4, wherein the titanium porous body has an O content of 0.6 % by mass or more and 2.0 % by mass or less.

6. The titanium porous body according to any one of claims 1 to 5, wherein the thickness is 30 µm to 400 µm.

7. The titanium porous body according to any one of claims 1 to 6, wherein the irreversible deformation is 0.1% or less.

8. A method for producing hydrogen, the method comprising decomposing water and generating hydrogen using a PEM-type water electrolysis device comprising the titanium porous body according to any one of claims 1 to 7.
